Europäisches Patentamt

European Patent Office

Office européen des brevets

(11) Publication number: **0 053 044**
**A1**

(12) **EUROPEAN PATENT APPLICATION**

(21) Application number: **81305563.9**

(22) Date of filing: **25.11.81**

(51) Int. Cl.³: **F 16 K 31/524**

(30) Priority: **26.11.80 GB 8037858**

(43) Date of publication of application:
**02.06.82 Bulletin 82/22**

(84) Designated Contracting States:
**DE FR GB IT**

(71) Applicant: **IMI OPELLA LIMITED**
**Twyford Road Rotherwas Industrial Estate**
**Hereford HR2 6LB(GB)**

(72) Inventor: **Kellas, Alastair John**
**"Rosemount" Hope-Under-Dimore Leominster**
**Hereford Worcestershire, HR6 OPX(GB)**

(74) Representative: **Bousfield, Roger James et al,**
**IMI LIMITED Patents and Licensing Department Kynoch**
**Works Witton**
**Birmingham B6 7BA(GB)**

(54) **Valves and mechanisms therefor.**

(57) A valve closure mechanism which includes a spindle (2) which is rotatable about its longitudinal axis and a couplet, the couplet being a pair of engageable cam surfaces present on adjacent components (6-7),(7-8),(8-9),(9-10),(10-11) or (11-12) positioned about the spindle (2) and urged towards a fixed point (F) relative to the spindle (2), both components being movable axially with respect to the spindle (2), one component (7, 9 or 11) being driven by the spindle (2), during rotation and the other component (6-8-10 or 12) being prevented from rotational movement with respect to the spindle (2), whereby rotation of the spindle (2) causes the components to move axially away from the fixed point (F).

FIG.1.

1                    M70021

## Valves and Mechanisms therefor

This invention relates to valves for the control of fluid flow and more particularly to valves and their mechanisms for use in water taps.

In a typical water tap mechanism employing a non-rising spindle, the spindle is threadedly coupled to a component carrying the tap washer and rotation of the spindle about its axis causes longitudinal movement of the component carrying the washer and hence opening or closing of the valve. The threaded coupling between the spindle and the component can employ any useful pitch depending on the speed of closure required but it is recognised that problems can arise at relatively high pitches. These are firstly that the pressure of water acting on the component carrying the washer can cause self-opening of the valve and secondly that a high pitch coupling provides a fast closing action and this can often result in "water hammer" which at best can be noisy and at worst can damage the pipework.

However, there is often a need to provide valves having a mechanism which provides for closure of the valve after only a small amount of rotation of the spindle. For example, elbow-action taps are often installed for convenience in hospitals and the like whose mechanism must allow for opening/closing of the tap with only a ninety degree (or quarter turn) rotation· of the spindle and which must provide good mechanical power.

The present invention generally overcomes the problems often associated with fast closing valves whilst maintaining good mechanical power.

In accordance with the invention, a valve closure mechanism is provided which incudes a spindle which is rotatable about its longitudinal axis and a couplet, the couplet being a pair of·engageable cam surfaces present on adjacent components that are positioned about the spindle and urged towards a fixed point relative to the spindle, both components being movable axially with respect to the spindle and one component being driven by the spindle during rotation and the other component being prevented from rotational movement with  respect to the spindle, whereby rotation of the spindle causes the components to move axially away from the fixed point.

The components carrying the cam surfaces preferably have a basic disc shape, each component having a centrally placed hole for mounting about the spindle and having its cam surface positioned on the area on one of the sides of the component between this hole and the periphery of the disc.

To enable the spindle to drive one of the components of the couplet, the cross-sectional area of the spindle can be non-circular, for example square, and the hole in the component made an exactly corresponding size and shape. The non-driven component can also be mounted about the spindle by means of a hole in the centre of the component but with a shape, for example circular, that does not correspond with that of the spindle so that the component can be held stationary whilst the spindle is rotated.

The non-driven component must be prevented from rotational movement with respect to the spindle during rotation of the spindle. This can be achieved in a variety of ways but is preferably effected by providing the mechanism with a housing that has an internal shape and size corresponding to the shape, for example hexagonal, of the relevant part of the non-driven component. The driven component must of course be allowed to rotate with the spindle within such a housing and the peripheral edge of the driven component can conveniently be circular.

In a preferred embodiment, the mechanism includes a plurality of couplets. Most preferably at least some of the components mounted about the spindle possess a cam surface on each of two sides so that one particular component can donate one of its cam surfaces to a first couplet and the other cam surface to a second couplet.

A component for carrying the tap closure means is also required in the mechanism and this can be conveniently mounted about the spindle also. Means for biassing the components carrying the cam surfaces towards a fixed point relative to the spindle are required so that the cam surfaces of each couplet are urged towards each other during operation of the mechanism. This can be achieved by use of a spring acting on the spindle in some suitable way or by means of a retraction cam attached to the end of the spindle nearest the valve closure.

In a more preferred embodiment, therefore, the mechanism comprises a spindle about which are positioned the components providing the cam surfaces and a component for carrying the valve closure, all these components being biassed, for example by means of a spring fitted within the component for holding the valve closure, towards a fixed point relative to the spindle which is commonly a stop, for example a ridge on the spindle against which the component furthest from that carrying the valve closure is positioned; all these components are held within a housing, the shape of the housing and the spindle being such that alternate components carrying cam surfaces are driven as the spindle rotates whereas the remainder are held within the housing and prevented from rotating with the spindle; to enable rotation of the spindle to be achieved, the end further from the valve closure extends outside the housing so that a hand wheel or other operating means can be attached thereto.

For a better understanding of the invention and to show how it may be put into effect, reference is now made, by way of example only, to the accompanying drawings in which:

Figure 1 is a cross-sectional view of a valve closure mechanism of the invention.

Figure 2 is a cross-sectional view of the valve mechanism of Figure 1 taken along the line II-II.

Figure 3 is a cross-sectional view of the valve mechanism of Figure 1 taken along the line III-III.

Figure 4 is a schematic diagram showing the arrangement of disc-shaped components in the mechanism of Figure 1.

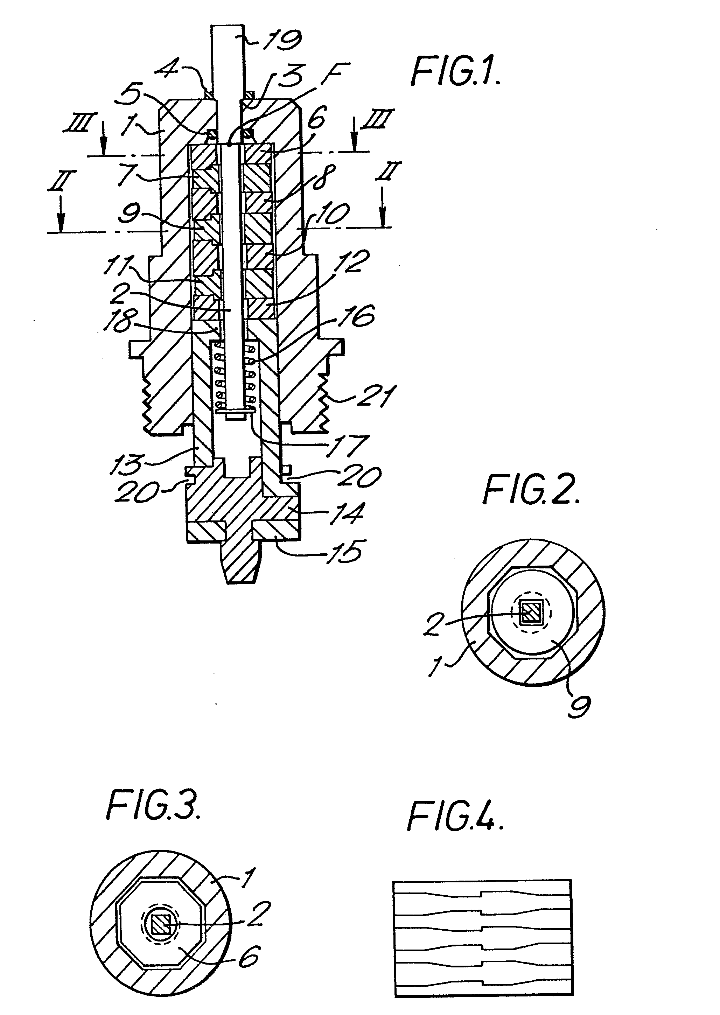

Referring to Figure 1, the mechanism shown therein has a housing 1 of essentially cylindrical shape but having an octagonel inner surface. A spindle 2 is positioned within a circular hole 3 of the housing 1 and prevented from longitudinal movement by means of a ring 4. Leakage past the spindle is prevented by means of a O-ring 5. The spindle 2 has a square cross-sectional except for that part which is situated within the hole 3 so that rotation of the spindle 2 about its longitudinal axis is possible.

Referring also to Figure 2, 3 and 4, disc-shaped components 6, 7, 8, 9, 10, 11 and 12 are positioned about the spindle 2. Component 6 is prevented from moving further up the spindle 2 by a small flange at fixed point F on the spindle.

A component 13 carrying a valve closure 14 (including a washer 15) is also positioned about the stem 2. All the components 6, 7, 8, 9, 10, 11, 12 and 13 are held in position about the stem and urged towards the fixed point F by means of a spring 16 which is compressed between a circular ring 17 held in a groove on the stem 2 and a circular flange 18 of the component 13 carrying the valve closure.

All the components 6 to 12 inclusive are essentially disc shaped and each face of the discs possesses a pair of semi-circular cam surfaces as shown in Figures 2, 3, and 4 except for the surfaces at each end of this series of components which are flat. Each of the cam surfaces is engageable with a cam surface on an adjacent component and couplets are therefore defined between components 6 and 7, 7 and 8, 8 and 9, 9 and 10, 10 and 11 and 11 and 12.

Components 7, 9 and 10 are positioned about the spindle 2 by means of square cross-sectional holes which correspond to the cross-sectional area of the spindle 2. Rotation of the spindle about its longitudinal axis therefore causes rotation of these components. Components 6, 8, 10 and 12 are positioned about the spindle 2 by means of round cross-section hole and they need not therefore rotate with the spindle. However, components 7, 9 and 11 have circular peripheries and are therefore free to rotate within the housing 1 whereas components 6, 8 and 12 have octagonal peripheries corresponding to the inner surface of the housing 1 and cannot therefore rotate within the housing.

Rotation of the spindle 2, for example by means (not shown) attached to the end 19 of the spindle causes rotation of components 7, 9 and 11 within the housing 1 but components 6, 8, 10 and 12 are held within the housing and therefore do not rotate. Interaction between the cam surfaces of each couplet causes each component 7 to 12 inclusive together with the component 13 carrying the valve closure, to move down the spindle away from the fixed point F against the action of the spring. Rotation of the spindle will normally be restricted to 90 degrees but rotation could continue up to 180 degrees if necessary before the limit of cam engagement is reached.

The valve closure 14 is secured to the component 13 by means of a ring positioned within a groove 20 defined between engaging castellations in the component 13 and the valve closure 14.

The mechanism is in use held within a valve body by interengagement between screw threads 21 on the housing 1 and complementary threads on the body. The body will of course define a valve seat for receiving the washer 15 of the valve closure 14.

Claims

1       A valve closure mechanism which includes a spindle which is rotatable about its longitudinal axis and a couplet, the couplet being a pair of engageable cam surfaces present on adjacent components that are positioned about the spindle and urged towards a fixed point relative to the spindle, both components being movable axially with respect to the spindle, one component being driven by the spindle, during rotation and the other component being prevented from rotational movement with respect to the spindle, whereby rotation of the spindle causes the components to move axially away from the fixed point.

2       A valve mechanism according to Claim 1 in which the components carrying the cam surfaces have a basic disc shape, each component having a centrally placed hole for mounting about the spindle and having its cam surfaces positioned on the area on one of the sides of the component between this hole and the periphery of the disc.

3       A valve mechanism according to Claim 1 or Claim 2 in which the cross-sectional area of the spindle is non-circular and the hole in the driven component is made an exactly corresponding shape and size.

4       A valve mechanism according to any preceding Claim in which the non-driven component is mounted about the spindle by means of a hole in the centre of the component having a shape that does not correspond with that of the spindle so that the component can be held stationary whilst the spindle is rotated.

5       A valve mechanism according to any preceding claim having a housing that has an internal shape and size corresponding to that of the relevant part of the non-driven component but which does not correspond to the shape and size of the relevant part of the driven component, thereby allowing the driven component to rotate within the housing.

6       A valve mechanism according to any preceding claim which includes a plurality of couplets.

7       A valve mechanism according to Claim 6 in which at least some of the components mounted about the spindle possess a cam surface on each of two sides so that one particular component can donate one of its cam surfaces to a first couplet and the other cam surface to a second couplet.

8       A valve mechanism according to any preceding Claim in which means are provided for biassing the components carrying the cam surfaces towards a fixed point relative to the spindle.

FIG.1.

FIG.2.

FIG.3.

FIG.4.

0053044

European Patent
Office

**EUROPEAN SEARCH REPORT**

Application number

EP 81 30 5563

## DOCUMENTS CONSIDERED TO BE RELEVANT

| Category | Citation of document with indication, where appropriate, of relevant passages | Relevant to claim |
|---|---|---|
| X | FR - A - 2 242 625 (HENZLER)<br><br>* claim 1; figures 1-3 *<br><br>--- | 1-5 |
| A | US - A - 3 682 438 (KLIMEK)<br><br>* abstract; figure 6 *<br><br>--------- | |

**CLASSIFICATION OF THE APPLICATION (Int. Cl. ³)**

F 16 K 31/524

**TECHNICAL FIELDS SEARCHED (Int.Cl. ³)**

F 16 K

**CATEGORY OF CITED DOCUMENTS**

X: particularly relevant if taken alone
Y: particularly relevant if combined with another document of the same category
A: technological background
O: non-written disclosure
P: intermediate document
T: theory or principle underlying the invention
E: earlier patent document, but published on, or after the filing date
D: document cited in the application
L: document cited for other reasons

&: member of the same patent family, corresponding document

The present search report has been drawn up for all claims

| Place of search | Date of completion of the search | Examiner |
|---|---|---|
| The Hague | 18-02-1982 | VAN REETH |

EPO Form 1503.1   06.78